**Europäisches Patentamt**

**European Patent Office**

**Office européen des brevets**

(11) Veröffentlichungsnummer: **0 022 568**
**B1**

# EUROPÄISCHE PATENTSCHRIFT

(45) Veröffentlichungstag der Patentschrift:
**15.02.84**

(21) Anmeldenummer: **80103993.4**

(22) Anmeldetag: **11.07.80**

(51) Int. Cl.³: **G 01 N 15/07,** G 01 N 33/48,
A 61 B 5/14

(54) **Gerät zur Zählung von in elektrisch leitenden Probenflüssigkeiten schwebenden Teilchen.**

(30) Priorität: **12.07.79 US 57045**

(43) Veröffentlichungstag der Anmeldung:
**21.01.81 Patentblatt 81/3**

(45) Bekanntmachung des Hinweises auf die Patenterteilung:
**15.02.84 Patentblatt 84/7**

(84) Benannte Vertragsstaaten:
**AT BE CH DE FR GB IT LI LU NL SE**

(56) Entgegenhaltungen:
**CH - A - 552 211**
**DE - A - 2 811 972**
**DE - B - 1 598 292**
**US - A - 3 768 084**
**US - A - 3 921 066**
**US - A - 4 167 038**

(73) Patentinhaber: **HYCEL, INC., 7800 Westpark Drive,**
**Houston Texas 77063 (US)**

(72) Erfinder: **Angel, Henry R., 30 Lindeman Drive, Trumbull**
**Connecticut 06611 (US)**
Erfinder: **Hennessy, James W., 30 Lindeman Drive,**
**Trumbull Connecticut 06611 (US)**

(74) Vertreter: **Grussdorf, Jürgen, Dr. et al, c/o Boehringer**
**Mannheim GmbH Postfach 31 01 20,**
**D-6800 Mannheim 31 (DE)**

# Gerät zur Zählung von in elektrisch leitenden Probenflüssigkeiten schwebenden Teilchen

Die vorliegende Erfindung betrifft ein Gerät zur Zählung von in elektrisch leitenden Probenflüssigkeiten schwebenden Teilchen mit einem Messaufnehmer, der einen Strömungskanal, in dem eine Messblendenöffnung angeordnet ist, sowie eine äussere, vor der Messblendenöffnung angeordnete Elektrode und eine innere, hinter der Messblendenöffnung angeordnete Elektrode aufweist, einer Auswerteschaltung zur Erfassung der beim Durchgang von Teilchen durch die Messblendenöffnung zwischen den Elektroden auftretenden Impedanzänderungen als Zählimpulse, einer die durch die Messblendenöffnung getretene Probenflüssigkeit aufnehmenden Volumenmesskammer, deren Füllzeit die Zählzeit der Auswerteschaltung bestimmt, und einer an die Volumenmesskammer angeschlossenen Pumpeneinrichtung zur Erzeugung eines Probenflüssigkeitsstroms durch die Messblendenöffnung und den Strömungskanal in die Volumenmesskammer nach Anordnung des Messaufnehmers in einer der zu untersuchenden Probenflüssigkeiten.

Die üblichen Flüssigkeits-Teilchenzähler nach dem Impedanzmessprinzip, von denen hier unter besonderer Bezugnahme auf Geräte zur Bestimmung hämatologischer Parameter die Rede ist, haben einen Messaufnehmer, der beispielsweise als Rohrstück ausgebildet ist und in einer Wand eine Öffnung aufweist, die üblicherweise als Messpore oder Messblendenöffnung bezeichnet wird. Sie besitzen eine innere Elektrode in dem Rohrstück und eine äussere Elektrode. Der Messaufnehmer wird in eine flüssige Probe eingetaucht, und die Flüssigkeit wird durch die Messpore in den Messaufnehmer eingesaugt. Wenn Teilchen durch die Öffnung strömen, erhöht sich die Impedanz zwischen der äusseren und inneren Elektrode, woraus sich Zählimpulse gewinnen lassen. Ein derartiges Gerät ist beispielsweise in der US-Patentschrift 3 921 066 beschrieben, auf die hier vollinhaltlich Bezug genommen wird. Bei diesem Gerät und ebenso bei einer Vielzahl anderer bekannter Geräte ist ein Messaufnehmer vorgesehen, um nacheinander rote und weisse Blutkörperchen zu zählen. Zum Zählen der Blutkörperchen wird eine Blutprobe entnommen, aus der eine erste Verdünnung von etwa 1 : 250 und eine zweite Verdünnung von etwa 1 : 62 500, bezogen auf die ursprüngliche Probe, gewonnen werden. Diese werden dann zum Zählen der weissen bzw. roten Blutkörperchen verwendet. Der Probe zum Zählen der weissen Blutkörperchen (Leukozyten) wird eine Zersetzungslösung zugesetzt, um die roten Blutkörperchen (Erythrozyten) zu zerstören. Die Erythrozyten-Zählung und die Leukozyten-Zählung kann paarweise für eine Mehrzahl von Patienten erfolgen; es können aber auch die Proben für die Erythrozyten-Zählung und für die Leukozyten-Zählung gruppenweise gezählt werden. Da die Proben für die Leukozyten-Zählung die Zersetzungslösung enthalten, muss der Messaufnehmer gespült werden, bevor nach einer Leukozyten-Zählung eine Erythrozyten-Zählung durchgeführt wird. Bei der Benutzung eines derartigen Gerätes hat man daher die Wahl, entweder die Zählung der Erythrozyten und der Leukozyten für jeden Patient zu trennen, was organisatorisch nachteilig ist, oder beide Zählungen für einen Patienten nacheinander durchzuführen. Im letzteren Fall muss nach jeder Leukozyten-Zählung gespült werden.

Es sind auch bereits Geräte bekanntgeworden, die getrennte Messaufnehmer zum Zählen der roten und der weissen Blutkörperchen aufweisen, insbesondere das «Modell S» der Firma Coulter. Derartige Geräte waren aber bis jetzt im Vergleich zu den übrigen Teilchenzählern für hämatologische Zwecke aufwendig und kostspielig.

Ein weiteres Gerät mit mehreren Messaufnehmern ist in der US-Patentschrift 3 444 464 beschrieben. Diese bekannte Einrichtung ist jedoch nicht in der Lage, mit jeder ihrer Messaufnehmer eine verschiedene Verdünnung zu verarbeiten.

Für diesen Zweck vorgesehen ist dagegen das in der deutschen Offenlegungsschrift 2 811 972 beschriebene Gerät, das zum Zählen der roten und weissen Blutkörperchen zwei vollkommen getrennte Messaufnehmer aufweist. Über die entsprechenden Einrichtungen zur Bestimmung des Probevolumens und die Art und Weise, wie diese mit den Messaufnehmern verbunden sind, ist in dieser Druckschrift nichts ausgesagt. Um die als schädlich erkannten Blasen bei der Zählung der weissen Blutkörperchen zu unterdrücken, wird zu diesem Zweck eine AC-Spannungsquelle verwendet.

Die schweizerische Patentschrift 552 211 befasst sich ebenfalls mit den Problemen, die durch Gasblasen entstehen, welche durch Elektrolyse an den Elektroden erzeugt werden können und häufig zu einer Verfälschung des Messergebnisses führen. In dieser Druckschrift wird vorgeschlagen, ausser der in Strömungsrichtung hinter der Messblendenöffnung vorgesehenen inneren Elektrode zwei in Strömungsrichtung vor der Messblendenöffnung angeordnete äussere Elektroden zu verwenden, von denen die in Strömungsrichtung erste ausserhalb des rohrförmigen Messaufnehmers angeordnet ist und der Zuführung des Messstromes dient. Die an dieser Stelle gebildeten Gasblasen sollen die Messung nicht stören, da sie nicht in den Messaufnehmer gelangen. In diesem Zusammenhang wird auch vorgeschlagen, die relativ grosse Impedanz, die durch den bei dieser Konstruktion notwendigen langen Ansaugkanal von der Ansaugöffnung des Messaufnehmers bis zur Messblendenöffnung erzeugt wird, dadurch messtechnisch zu eliminieren, dass ein Kondensator parallel geschaltet wird, durch den dieser Bahnwiderstand wechselstrommässig kurzgeschlossen wird.

Aufgabe der vorliegenden Erfindung ist es, eine Verbesserung der Messgenauigkeit des Gerätes bei gleichzeitig möglichst einfachem Aufbau und einfacherer Handhabung zu erreichen. Dabei sollen insbesondere Messungenauigkeiten durch Blasenbildung so weit vermindert werden, dass eine befriedigende Präzision der Messung erreicht wird.

Diese Aufgabe wird bei einem Gerät der eingangs näher bezeichneten Art dadurch gelöst, dass wenigstens ein weiterer in eine der Probenflüssigkeiten einbringbarer Messaufnehmer vorgesehen ist, dessen Aufbau dem des erwähnten Messaufnehmers entspricht, wobei die zwischen den Elektroden des wenigstens einen weiteren Messaufnehmers auftretenden Impedanzänderungen gleichermassen als Zählimpulse mit der Auswerteschaltung erfasst werden, die Messaufnehmer mittels einer Ventileinrichtung alternativ über jeweils ein Leitungssystem mit der Volumenmesskammer verbindbar sind, wobei der Querschnitt eines jeden dieser Leitungssystem so klein gewählt ist, dass darin eventuell vorhandene Blasen erheblich kleiner sind als das von der Volumenmesskammer erfasste Volumen der Probenflüssigkeit.

Gemäss einer besonders bevorzugten Ausführungsform ist in Strömungsrichtung hinter den Leitungssystemen in der Volumenmesskammer zusätzlich zu den inneren Elektroden in den Messaufnehmern eine weitere innere Elektrode vorgesehen. Diese ist mit den inneren Elektroden in den Messaufnehmern parallel geschaltet. Durch diese Massnahme wird die durch das relativ enge Leitungssystem zwischen dem jeweiligen Messaufnehmer und der Volumenmesskammer bewirkte hohe Impedanz praktisch eliminiert.

Weitere bevorzugte Ausführungsformen der Erfindung sind Gegenstand der abhängigen Patentansprüche. Einige besondere Vorteile dieser Ausführungsformen werden im folgenden im Zusammenhang mit einer in den Figuren dargestellten bevorzugten Ausführungsform der Erfindung dargelegt. Es zeigen:

Fig. 1 eine Ansicht eines Gerätes zur Bestimmung hämatologischer Parameter gemäss der vorliegenden Erfindung,

Fig. 2 eine teilweise weggebrochene Darstellung der Messaufnehmeranordnung eines Gerätes nach Fig. 1,

Fig. 3 eine teilweise Schnittdarstellung entlang einer Linie III–III nach Fig. 2 und

Fig. 4 eine diagrammatische Darstellung des Gerätes nach Fig. 1, teilweise mechanisch-schematisch, teilweise elektrisch-schematisch und teilweise als Blockschaltbild.

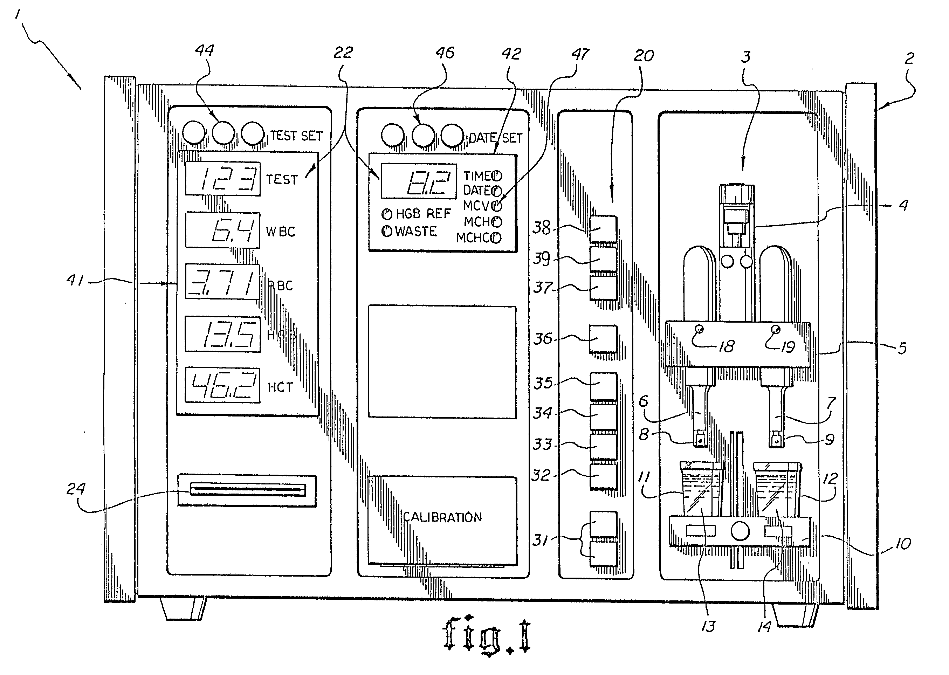

Die Tabellen 1A und 1B sind zum Verständnis der Betriebsweise eines Gerätes nach Fig. 1 nützlich.

Fig. 1 zeigt eine Ansicht eines Gerätes zur Bestimmung hämatologischer Parameter 1 gemäss der vorliegenden Erfindung. Das Gerät 1 besitzt ein Gehäuse 2, an dem eine Messaufnehmeranordnung 3 befestigt ist, welche wiederum einen Messaufnehmerkopf 4 einschliesst, der hydraulisch mit einem ersten Messaufnehmer 6 und einem zweiten Messaufnehmer 7 verbunden ist. Jeder der Messaufnehmer 6 und 7 hat eine Messpore 8 bzw. 9, die man auch als Messblendenöffnung bezeichnen kann. Der Durchsatz von Proben, von denen mehrere Verdünnungen hergestellt und individuell gemessenen werden müssen, kann mit dem erfindungsgemässen Gerät erhöht werden, obwohl es nur einen einzigen Messaufnehmerkopf 4 aufweist. Hierzu sind zwei Messaufnehmer 6 und 7 statt des einen Messaufnehmers vorgesehen, den beispielsweise die Patentschrift beschreibt, auf die weiter oben Bezug genommen wurde. Die hydraulische Verbindung wird durch ein Verbindungsstück hergestellt, das weiter unten näher beschrieben wird. Das hier beschriebene Gerät ist ähnlich dem in der US-PS 4 167 038 (veröffentlicht am 4.9.79) beschriebenen. Als Stand der Technik von Bedeutung ist der Inhalt der US-Patentschriften 4 063 309 und 4 068 169 anzusehen. Das Gerät zur Bestimmung hämatologischer Parameter 1 schliesst vorzugsweise Einrichtungen zur Bestimmung folgender Parameter ein (in Klammern ist jeweils die übliche aus den englischen Fachausdrücken abgeleitete Abkürzung angegeben, die auch im folgenden verwendet wird): Zahl der roten Blutkörperchen (RBC), Zahl der weissen Blutkörperchen (WBC), Hämoglobin (HGB), Hämatokrit (HCT), mittleres korpuskuläres Volumen (MCV), mittlerer korpuskulärer Hämatokrit (MCH), mittlere korpuskuläre Hämoglobinkonzentration (MCHC). Einzelheiten über die Verfahren zur Messung und Bestimmung dieser Parameter sind in den zuvor zitierten Patentschriften angegeben.

Bevor die vorliegende Erfindung mehr im einzelnen beschrieben wird, seien die Funktionen des Gerätes nach Fig. 1 kurz dargestellt. Zum Halten mindestens eines Probengefässes ist ein verstellbarer Träger 10 vorgesehen, der zwischen einer oberen und einer unteren Position beweglich ist. In der dargestellten Ausführungsform trägt er einen ersten Probenbehälter 11 und einen zweiten Probenbehälter 12. Die Probenbehälter 11 und 12 enthalten Proben 13 und 14, welche normalerweise zwei verschiedene Verdünnungen einer Blutprobe einschliessen. Die erste Verdünnung 13 liegt beispielsweise bei etwa 1 : 250, wobei dieser Probe ein Zersetzungsreagenz beigefügt ist, um Leukozyten-Bestimmungen zu ermöglichen. Die zweite Verdünnung 14 kann beispielsweise ein Verdünnungsverhältnis von 1 : 62 500 aufweisen zur Bestimmung der Zahl der roten Blutkörperchen. Nachdem der Benutzer des Gerätes die Verdünnungen 13 und 14 zubereitet hat, werden die Probenbehälter 11 und 12 auf den verstellbaren Träger 10 gesetzt, der derart nach oben bewegt wird, dass die Messaufnehmer 6 und 7 in die Proben 13 bzw. 14 eintauchen. Um anzuzeigen, welcher der Messaufnehmer zur Messung einer Probe angeschlossen ist, sind Lampen 18 und 19, vorzugsweise an dem Verbindungsstück 5, vorgesehen. Die Lampen 18 und 19, die auch durch lichtemittierende Dioden gebildet sein können, werden alternierend betrieben. Die im Betrieb notwendigen Betriebszustände werden mit Hilfe einer Kontrollschaltung synchronisiert, die weiter unten beschrieben ist. Sie werden ausgelöst durch Drücken eines von einer Mehrzahl von Funktionswahlknöpfen 20. Die erhaltenen Ergebnisse werden auf einer Anzeigeeinrichtung 22 dargestellt und können ausserdem mit Hilfe eines Druckers 24 auf Druckkarten gedruckt werden. In der Fig. 1 ist von dem Drucker 24 der Eingabe-Ausgabe-Schlitz für die Druckkarten sichtbar.

Die Funktionswahlknöpfe 20 können auf vielerlei Weise und in vielerlei Ausführungsformen mit einer Kontrollschaltung verschaltet sein. Bei der vorliegenden Ausführungsform sind Wahlknöpfe 31 bis 39 vorgesehen. Die Wahlknöpfe 31 bis 35 dienen der Reihe nach folgenden Funktionen: «Ein/Aus», «Reinigen», «Kalibrieren», «Rückwärtsspülen» von Flüssigkeit aus den Messaufnehmern 6 und 7, «Rückstellen». Der Knopf 36 wird benutzt, um einen Druckbefehl zu geben, wenn eine Druckkarte in den Drucker 24 eingesetzt ist. Der Knopf 37 dient zur Einleitung der Betriebsweise «Spülen», bei der eine Reinigungsflüssigkeit in die Messaufnehmeranordnung 3 eingesaugt werden kann. Bei Betätigung des Knopfes 38 wird ein Befehl für eine duale Betriebsweise gegeben, bei der sowohl eine Leukozyten-Zählung als auch eine Messung des Hämoglobinwertes durchgeführt und die gemessenen Werte angezeigt werden. Bei Betätigung des Knopfes 39 wird eine Erythrozyten-Zählung und eine Bestimmung des Hämatokrit-Wertes durchgeführt. Bei der dargestellten Ausführungsform schliesst die Anzeigeeinrichtung 22 zwei Teile 41 und 42 ein. Die Anzeige 41 weist getrennte Anzeigefelder auf, auf denen folgende Werte numerisch angezeigt werden: Die Testnummer, die der im Test befindlichen Probe willkürlich zugeordnet werden kann, sowie die «Messwerte», d. h. WBC, RBC, HGB und HCT. Zur Einstellung der Testnummer der ersten Probe kann eine Mehrzahl von Knöpfen 44 vorgesehen sein. Vorzugsweise werden die Testnummern danach automatisch fortgeschaltet. Der Teil 42 der Anzeigeeinrichtung hat ein Anzeigefeld zur Darstellung des berechneten Wertes, der Uhrzeit oder des Datums. Zur Einstellung eines Datums kann eine Mehrzahl von Knöpfen 46 vorgesehen sein. Der Anzeigeteil 42 kann durch Drücken des Knopfes 36, ohne dass eine Druckkarte in den Drucker 24 eingelegt ist, durch das Betriebspersonal so eingestellt werden, dass verschiedene der vorgesehenen Anzeigen angezeigt werden, wobei der momentan dargestellt Wert durch eine der Anzeigelampen 47 angegeben wird, die mit Bezeichnungen versehen sind, aus denen die dargestellte Grösse hervorgeht.

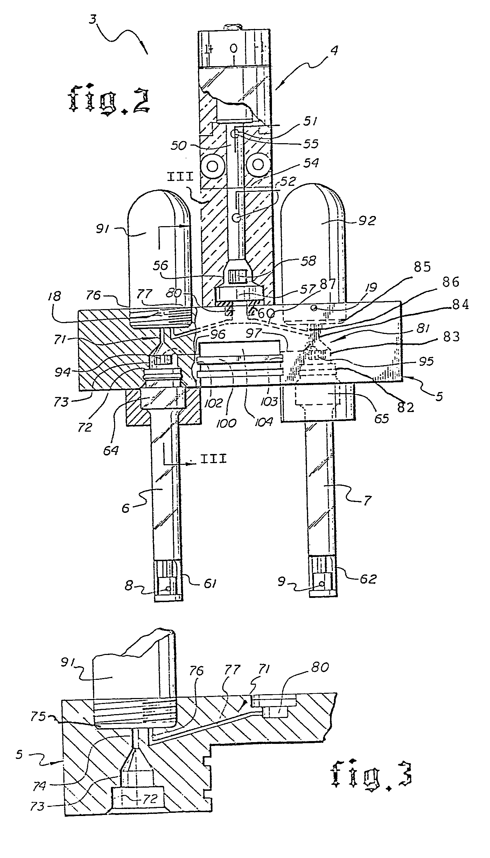

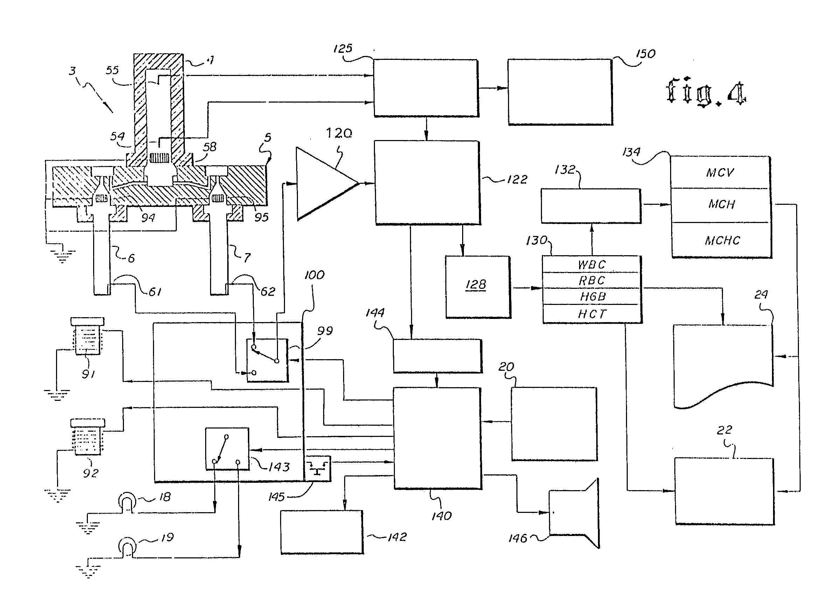

Eine genauere Beschreibung der Erfindung stützt sich im wesentlichen auf die Fig. 2 und 3. Diese zeigen eine Ansicht, teilweise weggebrochen, einer Messaufnehmeranordnung 3 nach Fig. 1 bzw. eine Teilansicht als vertikalen Querschnitt entlang einer Linie III–III unter einem Winkel von etwa 45° bezüglich der Zeichenebene von Fig. 1. Entsprechende Bauteile sind mit gleichen Bezugszeichen versehen. Die Messaufnehmeranordnung 3 in Fig. 2 hat eine Volumenmesskammer, die eine vertikale Bohrung 50 in dem Messaufnehmerkopf 4 umfasst. Die Bohrung 50 weist ein geschlossenes oberes Ende und ein offenes unteres Ende auf, welches der hydraulischen Verbindung mit den Messaufnehmern 6 und 7 dient. Ein erster Druckanschluss 51 und ein zweiter Druckanschluss 52 sind in der Bohrung 50 vorgesehen, um in wohlbekannter Weise die Probe darin anzusaugen bzw. aus ihr abzulassen. Weiter sind eine Startelektrode 54 und eine Stoppelektrode 55 vorgesehen, deren Enden sich in einer gewissen Entfernung voneinander in der Bohrung 50 befinden, wobei beide Enden zwischen den Druckanschlüssen 51 und 52 liegen. Im Betrieb wird über den Anschluss 51 angesaugt, und die Zählung beginnt in bekannter Weise, wenn die Flüssigkeit die Startelektrode 54 berührt. Wenn die Flüssigkeit den Kontakt mit der Stoppelektrode 55 bildet, wird die Zählung beendet. Danach wird die Flüssigkeit über den Anschluss 52 abgelassen. Weiterhin schliesst der Messaufnehmerkopf 4 Bohrungen 56 und 57 ein, die mit der Bohrung 50 konzentrisch und axial gegenüber dieser versetzt sind, wobei sie in Verbindung mit dem unteren offenen Ende der Bohrung 50 stehen. Der Durchmesser der Bohrung 57 ist so gewählt, dass sie zur Aufnahme eines Messaufnehmers 6 oder 7 oder in der vorliegenden Ausführungsform einer hydraulischen Verbindungseinrichtung 60 an dem Verbindungsstück 5 geeignet ist. Die Bohrung 56 liegt zwischen den Bohrungen 57 und 50 und umgibt eine innere Elektrode 58. Die innere Elektrode 58 ist in der dargestellten bevorzugten Ausführungsform der Erfindung mit einem gemeinsamen Anschlusspunkt verbunden und bildet einen Pol einer Impedanzmesseinrichtung zur Zählung von Blutkörperchen. Der andere Pol der Impedanzmesseinrichtung umfasst wahlweise die äussere Elektrode 61 oder 62, die auf der äusseren Oberfläche der Messaufnehmer 6 bzw. 7 ausgebildet sind. Der Messaufnehmer 6 hat einen oberen Teil 64, der so ausgebildet ist, dass er in die Bohrung 57 oder in der vorliegenden Ausführungsform in das Verbindungsstück 5 passt. In ähnlicher Weise hat der Messaufnehmer 7 einen oberen Teil 65 zum Anschluss an die Bohrung 57 oder das Verbindungsstück 5 und steht in Verbindung mit der Bohrung 50.

Das Verbindungsstück 5 ist vorgesehen, um eine wahlweise hydraulische Verbindung der Messaufnehmer 6 oder 7 mit dem Messaufnehmerkopf 4 zu ermöglichen, wobei, wie im folgenden eingehender beschrieben wird, eine weitere Verbesserung erreicht wird. Das Verbindungsstück 5 schliesst einen ersten Flüssigkeitsweg 71 ein, der im folgenden auch als Leitungssystem bezeichnet wird und der eine Ausnehmung 72 zur Aufnahme des oberen Teils 64 des Messaufnehmers 6 umfasst.

Oberhalb davon befindet sich eine Bohrung 73, die mit einer engeren Bohrung 74 in Verbindung steht, welche ihrerseits zu einer Ausnehmung 75 geöffnet ist. Von der Ausnehmung 75 aus nach unten erstreckt sich eine Leitung 76, die verbunden ist mit einer nach oben gerichteten Leitung 77, die sich in eine Ausnehmung 80 öffnet, welche zur Verbindung mit dem Aufnehmerkopf 4 vorgesehen ist. In ähnlicher Weise ist zur Aufnahme des oberen Teiles 65 des Aufnehmers 7 eine Bohrung 82 vorgesehen, die mit einer oberhalb angeordneten Bohrung 83 in Verbindung steht, die ihrerseits verbunden ist mit einer sich nach oben erstreckenden und in eine Ausnehmung 85 öffnenden kleineren Bohrung 84. Wiederum erstreckt sich von der Ausnehmung 85 eine Leitung 86 nach unten und ist verbunden mit einer nach oben verlaufenden Leitung 87, deren gegenüberliegendes Ende sich in die Ausnehmung 80 öffnet. Auch eine verbesserte Ventilsteuerung der Flüssigkeitswege 71 bzw. 81 ist dadurch möglich. In den Ausnehmungen 75 bzw. 85 sind Solenoide 91 bzw. 92 angeordnet, die wahlweise zwischen einer offenen und einer geschlossenen Position betrieben werden können. Die Solenoide 91 und 92 werden derart betrieben, dass zu einem bestimmten Zeitpunkt nur jeweils einer der Flüssigkeitswege 71 oder 81 geöffnet ist, während der andere geschlossen ist.

Bevorzugt sind weiterhin zusätzliche innere Elektroden 94 bzw. 95 in den Bohrungen 73 bzw. 83 vorgesehen. Anschlusseinrichtungen 96 bzw. 97 erstrecken sich von den Bohrungen 73 bzw. 83 zur äusseren Oberfläche des Verbindungsstückes 5, vorzugsweise zwecks Verbindung mit einer Platine für eine gedruckte Schaltung 100, die in Nuten 102 und 103 an den Seitenwänden einer Ausnehmung 104 gelagert ist, welche in dem Verbindungsstück 5 ausgebildet ist. Die Solenoide 91 und 92 sind ebenfalls an die gedruckte Schaltung 100 angeschlossen. Es ist wesentlich, dass die Leitungen 74 und 77 einen kleinen Durchmesser haben. In diesem Zusammenhang ist die Grösse des Leitungsdurchmessers als gross oder klein einzustufen, je nach der Grösse einer Blase, die sich in den Flüssigkeitswegen 71 bzw. 81 bilden kann, wobei die Blasengrösse im Vergleich zum Probevolumen zu betrachten ist. Das Vorhandensein von Blasen beeinträchtigt die Genauigkeit der erhaltenen Zählwerte. Für den Fachmann ist leicht bestimmbar, was ein kleiner Durchmesser ist. Bei einer Ausführungsform, bei der die Startelektrode 54 und die Stoppelektrode 55 so weit voneinander entfernt sind, dass das Probevolumen, das in den Messaufnehmerkopf 4 angesaugt wird, 0,25 ml beträgt, ist beispielsweise ein Leitungsdurchmesser von 1,57 mm (0,062 inches) als klein anzusehen. Ein weiterer Grund, warum Blasen höchst unerwünscht sind, besteht darin, dass Blasen an der Oberfläche der inneren Elektroden 58, 94 oder 95 zu Elektrolyseerscheinungen führen können, so dass die Elektrode mit Gas «überzogen» wird. Dadurch wird die Empfindlichkeit des Impedanzkreises zwischen innerer und äusserer Elektrode erniedrigt.

Die Impedanz dieses Kreises wird weiterhin durch die Grösse des Flüssigkeitsweges beeinflusst. Da der Leitwert des Impedanzkreises bei Abwesenheit von Teilchen in den Poren 8 bzw. 9 der Messaufnehmer 6 bzw. 7 eine Funktion der Grösse des Flüssigkeitsweges und der Leitfähigkeit der Flüssigkeit ist, führt eine kleine Ausführung der Leitungen 76, 77, 86 und 87 zu einer relativ grossen Impedanz des Gesamtweges. Eine vergrösserte Impedanz im Vergleich zu Impedanzaufnehmern bekannter Art vermindert aber das Verhältnis zwischen Nutzsignal und Störsignal. Es ist daher wünschenswert, die hydraulischen Vorteile einer geringen Grösse des Flüssigkeitsweges zu erhalten und gleichzeitig die elektrischen Nachteile zu vermeiden. Aus diesem Grund sind die zusätzlichen inneren Elektroden 94 und 95 vorgesehen. Um die Impedanz des Flüssigkeitsweges zu vermindern, sind die Elektroden 58, 94 und 95 parallel geschaltet und die äusseren Elektroden 61 und 62 werden wahlweise in den Impedanzkreis geschaltet mit Hilfe einer Umschaltschaltung 99 auf der Platine 100 (Fig. 4).

Dies ist in Fig. 4 dargestellt, die eine diagrammatische Darstellung, grösstenteils in Form eines Blockdiagramms, einer Vorrichtung nach den Fig. 1 bis 3 ist. Wiederum werden die gleichen Bezugszeichen für entsprechende Komponenten verwendet. Die Elektroden 58, 94 und 95 sind mit einem gemeinsamen Anschlusspunkt verbunden. Die äusseren Elektroden 61 und 62, die von einer Stromquelle mit Energie versorgt werden, sind mit einer Auswerteschaltung verbunden, die einen Verstärker 120 einschliesst, dessen Ausgang an eine Zählschaltung 122 angeschlossen ist, wie in der oben zitierten US-PS 4 167 038 beschrieben wird. Die Startelektrode 54 und die Stoppelektrode 55 sind mit einer Start/Stopp-Schaltung 125 verbunden, die ihrerseits an die Zählschaltung 122 angeschlossen ist, um die Erzeugung von Zählimpulsen in bekannter Weise ein- und auszuschalten. Die Zählschaltung 122 liefert Ausgangssignale an die Umschalteinrichtung 128 zur Verbindung der Zählergebnisse, beispielsweise Leukozyten-Zahl (WBC), Erythrozyten-Zahl (RBC), Hämoglobin (HGB) und Hämatokrit (HCT), mit dem Ergebnisregister 130. Das Ergebnisregister 130 liefert auch Ausgangssignale an die Recheneinheit 132, um berechnete Werte zu erhalten, beispielsweise das mittlere korpuskuläre Volumen (MCV), die mittlere korpuskuläre Hämoglobinkonzentration (MCHC) und den mittleren korpuskulären Hämatokrit (MCH), die an das Ergebnisregister 134 für berechnete Werte weitergeleitet werden. Die Ergebnisregister 130 und 134 sind ausserdem wahlweise an die Anzeigeeinrichtung 22 und den Drucker 24 (Fig. 1) über übliche, nicht dargestellte, Verbindungseinrichtungen angeschlossen. Der Betrieb erfolgt unter Kontrolle der Kontrollschaltung 140. Die Funktionswahlknöpfe 20 sind in üblicher Weise mit der Kontrollschaltung 140 verbunden und verschaltet. Spezielle Ausführungsformen des Interface sind dem Fachmann wohl bekannt und hängen nur von der gewünschten weiter unten dargelegten Betriebsweise ab. Spezielle Ausführungsformen solcher Verschaltung bestimmter Funktionen sind in der oben zitierten US-PS 3 921 066 dargelegt. Die Kontrollschaltung 140 ist weiterhin verbunden mit den Solenoiden 91 und 92 und mit einer Druckerzeugungseinheit 150, die in der in der US-PS 3 921 066 beschriebenen Art und Weise Über- und Unterdruck erzeugen kann. Die Kontrollschaltung 140 schliesst einen Befehlsspeicher 142 ein, in dem Befehlssignale gespeichert sind, die die sequentielle Ausführung der Funktionen steuern, die durch Betätigung der Funktionswahlknöpfe 20 angesteuert wurden.

Befehle von der Kontrollschaltung 140 sind über eine Lampentreiberschaltung 143 auf der Platine 100 an die Lampen 18 und 19 angelegt. Jede Lampe 18 oder 19 leuchtet mit hoher Intensität, wenn der Solenoid 91 oder 92, dem sie zugeordnet ist, offen ist. Eine der Lampen 18 oder 19 leuchtet mit geringer Intensität, wenn beide Solenoide 91 und 92 geschlossen sind, wobei sie den zuletzt betriebenen Solenoid 91 bzw. 92 anzeigt. Auf der Platine 100 ist ein Schalter 145 angeordnet, der mit der Kontrollschaltung 140 verbunden ist, um bei seiner Betätigung einen Umschaltbefehl zu erzeugen, durch den der Beleuchtungszustand der Lampen 18 oder 19 gewechselt wird. Die Schaltung ist so ausgelegt, dass die Lampen 18 bzw. 19 anzeigen, welcher der Solenoide 91 bzw. 92 im jeweiligen Augenblick in Betrieb ist, d.h. welcher Solenoid auf einen «Rückwärtsspülen»-Befehl hin öffnen wird.

Mit der Kontrollschaltung 140 ist eine Fehlererkennungsschaltung 144 verbunden. Die Fehlererkennungsschaltung 144 kann beispielsweise einen «Verstopfungsalarm» einschliessen, wie er in der weiter oben zitierten US-PS 3 921 066 dargestellt ist. Die Kontrollschaltung 140 ist mit der Fehlererkennungsschaltung 144 so verschaltet, dass der im Befehlsregister 142 gespeicherte Druckbefehl gelöscht wird, wenn ein Fehler bezüglich der Messung einer Probenflüssigkeit durch den Messaufnehmer 6 oder 7 entdeckt wird. Vorzugsweise ist eine Alarmschaltung 146 vorgesehen, die mit der Kontrollschaltung 140 verbunden ist und im Fehlerfall einen hörbaren Alarm erzeugt. Durch die Kombination des beschriebenen Fehlererkennungssystems mit der Möglichkeit zum Anschluss mehrerer Messwertaufnehmer wird der Betrieb des Gerätes weiter verbessert, so dass die durch die mehreren Messaufnehmer 6 und 7 weiter unten eingehender beschriebenen Möglichkeiten effektiv benutzt werden.

Ein Zyklus zur Untersuchung einer Probe wird im folgenden unter Bezugnahme auf die Tabellen 1A und 1B beschrieben, die den Betrieb des Gerätes illustrieren. Die Tabellen 1A und 1B dienen auch dazu, die Schaltzustände der Kontrollschaltung 140 zu definieren. Im praktischen Betrieb werden entsprechende Verdünnungen 13 und 14 in den Probenbehältern 11 und 12 zubereitet und auf dem verstellbaren Träger 10 unterhalb der Messaufnehmer 6 bzw. 7 positioniert. Der verstellbare Träger 10 wird angehoben, so dass der Messaufnehmer 6 in die Probe 13 und der Messaufnehmer 7 in die Probe 14 eintaucht. Die Funktionswahlknöpfe 20 können in einer Anzahl verschiedener Reihenfolgen gedrückt werden. Beim vorliegenden Beispiel wird der Knopf 39 zuerst gedrückt, danach der Knopf 38 und als dritter der Knopf 36. Infolgedessen werden Befehle, eine Erythrozyten-Zählung durchzuführen und den Hämatokrit zu messen, eine Leukozyten-Zählung durchzuführen und den Hämoglobinwert zu messen und die Resultate mit Hilfe des Druckers 24 auszudrucken, in dem Befehlsregister 142 der Kontrollschaltung 140 abgespeichert. Der Befehl zur Erythrozyten-Zählung wurde zuerst gegeben und deshalb gibt die Kontrollschaltung 140 ein Signal an die Solenoide 91 und 92, den Flüssigkeitsweg 81 (Fig. 3) zu öffnen und den Flüssigkeitsweg 71 zu schliessen. Die Druckerzeugungseinheit 150 wird so betrieben, dass durch den Druckanschluss 51 angesaugt wird. Infolgedessen wird Probenflüssigkeit aus dem Probenbehälter 12 durch die Messpore 9 in den Messaufnehmer 7 und durch den Flüssigkeitsweg 81 in die Volumenmesskammer 50 gesaugt. Der Flüssigkeitsspiegel steigt weiter an bis an den Druckanschluss 51. Eine Erythrozyten-Zählung beginnt, wenn der Flüssigkeitsspiegel die Startelektrode 54 erreicht, und endet, wenn der Flüssigkeitsspiegel die Stoppelektrode 55 erreicht. Die Stoppelektrode 55 liefert auch ein Ausgangssignal an die Druckerzeugungseinheit 150, um in wohlbekannter Weise das Abfliessen der Flüssigkeit durch den zweiten Druckanschluss 52 zu gewährleisten. Die Zählschaltung 122 verarbeitet die Zählimpulse und erzeugt den Erythrozytenwert. Das Ergebnis wird als Information zur Erzeugung des Hämatokritmesswertes benutzt, wie es in dem in der US-PS 4 068 169 beschriebenen Gerät der Fall ist. Nachdem die dieser Betriebsweise entsprechenden Funktionen ausgeführt sind, gibt die Kontrollschaltung 140 ein Ausgangssignal an die Solenoide 91 und 92 derart, dass der Flüssigkeitsweg 81 geschlossen und der Flüssigkeitsweg 71 geöffnet wird. Jetzt wiederholt sich ein ähnlicher Vorgang des Ansaugens von Flüssigkeit in den Messaufnehmer 6 bis hinauf in die Volumenmesskammer 50. Mit Hilfe der Zählschaltung 120 werden der Leukozyten-Zählwert und der Hämoglobinwert ermittelt. Die Recheneinheit 132 liefert weiterhin berechnete Ergebnisse an das Ergebnisregister für berechnete Werte 134. Nach Durchführung aller Berechnungen werden die Ergebnisse auf eine Druckunterlage in dem Drucker 24 gedruckt.

Im Falle eines Fehlers (Tabelle 1B) liefert die Fehlererkennungsschaltung 144 ein Eingangssignal an die Kontrollschaltung 140, durch das der Druckbefehl in dem Befehlsspeicher 142 gelöscht wird. Die Funktionsfolge läuft wie oben beschrieben ab, aber der Druckbefehl wird nicht ausgeführt. Das Betriebspersonal kann zu dem Gerät zurückkehren, durch einfachen Druck auf den Knopf 34 (Fig. 1) einen Befehl «Rückwärtsspülen» geben, wobei, falls notwendig, zuvor der Schalter 145 zu betätigen ist, und danach durch Drücken des Knopfes 38 oder 39 einen erneuten Befehl zur Führung des Testes geben, für den ein Fehler entdeckt worden ist. Schliesslich kann ein neuer Druckbefehl durch Drücken des Knopfes 36 gegeben werden. Der Parameter, für den ein Fehler entdeckt wurde, kann in geeigneter Weise, wie dem Fachmann bekannt, auf ein Ausgangssignal der Fehlererkennungsschaltung 144 angezeigt werden, beispielsweise durch Blinken einer Anzeige, wie in der US-PS 3 921 066 beschrieben.

Unnötige Wiederholungen von Funktionen aufgrund von Fehlern können dadurch ausgeschlossen werden.

Es ist besonders hervorzuheben, dass keine Vermischung der Proben zur Zählung der roten und weissen Blutkörperchen unterhalb der Ausnehmung 80 in dem Verbindungsstück 5 (Fig. 3) stattfinden kann. Die Zersetzungslösung in der Verdünnung zum Zählen der weissen Blutkörperchen kann daher nicht das Ergebnis der Erythrozyten-Zählung verfälschen, da das Ergebnis von der Anzahl der Teilchen, die durch den Aufnehmer 7 strömen, abhängt. Dadurch ist ein schneller und effizienter Betrieb der erfindungsgemässen Einrichtung möglich, wobei nur ein einziger Messaufnehmerkopf 4 zur Durchführung einer Mehrzahl von Teilchenzählfunktionen notwendig ist. Durch die Möglichkeit, eine Folge von durch das Betriebspersonal gewählten Funktionen zu speichern, und durch die Möglichkeit, dass das Betriebspersonal das Gerät nach Beginn einer Messung unbeaufsichtigt weiterlaufen lassen kann, wird eine zusätzliche Erleichterung des Betriebes erreicht. Das Ausdrucken einer Ergebniskarte im Falle eines Fehlers wird verhindert, und die Anzahl der zu wiederholenden Funktionen in einem solchen Fehlerfall wird minimiert.

Durch die vorliegende Erfindung wird somit ein verbessertes Gerät zur Durchführung einer Mehrzahl von Teilchenzählungen zur Verfügung gestellt, das konstruktiv effizient aufgebaut und einfach im Betrieb ist.

Tabelle 1A

| Zu drückender Knopf | Befehl in Register 142 | Betriebs- weise | Solenoid 91 | Solenoid 92 | Lampe 18 | Lampe 19 |
|---|---|---|---|---|---|---|
| | Bereitschafts- stellung | | geschlossen | geschlossen | zuletzt betriebene schwach, andere aus | |
| 39 | RBC/HCT | | | | | |
| 38 | WBC/HGB | | | | | |
| 36 | Drucken | | | | | |
| | | RBC/HCT | geschlossen | offen | aus | ein - hell |
| | | WBC/HGB | offen | geschlossen | ein - hell | aus |
| | | Drucken | geschlossen | geschlossen | ein - schwach | aus |

Tabelle 1B

| Zu drückender Knopf | Befehl in Register 142 | Betriebs- weise | Solenoid 91 | Solenoid 92 | Lampe 18 | Lampe 19 |
|---|---|---|---|---|---|---|
| | Bereitschafts- stellung | | geschlossen | geschlossen | zuletzt betriebene schwach, andere aus | |
| 39 | RBC/HCT | | | | | |
| 38 | WBC/HGB | | | | | |
| 36 | Drucken | | | | | |
| | D-R-U-C-K-E-N | RBC/HCT (Fehler) | geschlossen | offen | aus | ein - hell |
| | | WBC/HGB | offen | geschlossen | ein - hell | aus |
| | | Warten | geschlossen | geschlossen | ein - schwach | aus |
| Schalter 145 | | Umschalten | geschlossen | offen | aus | ein - schwach |
| 34 | | Rückwärts- spülen | geschlossen | offen | aus | ein - hell |
| 39 | RBC/HCT | RBC/HCT | geschlossen | offen | aus | ein - hell |
| 36 | Drucken | Drucken | geschlossen | geschlossen | aus | ein - schwach |

**Patentansprüche**

1. Gerät zur Zählung von in elektrisch leitenden Probeflüssigkeiten schwebenden Teilchen mit
- einem Messaufnehmer (6), der einen Strömungskanal, in dem eine Messblendenöffnung (8) angeordnet ist, sowie eine äussere, vor der Messblendenöffnung angeordnete Elektrode (61) und eine innere, hinter der Messblendenöffnung angeordnete Elektrode (94) aufweist,
- einer Auswerteschaltung (120, 122, 125) zur Erfassung der beim Durchgang von Teilchen durch die Messblendenöffnung zwischen den Elektroden auftretenden Impedanzänderungen als Zählimpulse,

- einer die durch die Messblendenöffnung getretene Probenflüssigkeit aufnehmenden Volumenmesskammer (50, 54, 55), deren Füllzeit die Zählzeit der Auswerteschaltung bestimmt,
- und einer an die Volumenmesskammer angeschlossenen Pumpeinrichtung (150) zur Erzeugung eines Probenflüssigkeitsstroms durch die Messblendenöffnung und den Strömungskanal in die Volumenmesskammer nach Anordnung des Messaufnehmers in einer der zu untersuchenden Probenflüssigkeiten, dadurch gekennzeichnet, dass
- wenigstens ein weiterer in eine der Probenflüssigkeiten einbringbarer Messaufnehmer (7) vorgesehen ist, dessen Aufbau dem des erwähnten Messaufnehmers (6) entspricht, wobei die zwischen den Elektroden (62, 95) des wenigstens einen weiteren Messaufnehmers auftretenden Impedanzänderungen gleichermassen als Zählimpulse mit der Auswerteschaltung erfasst werden,

– die Messaufnehmer (6, 7) mittels einer Ventileinrichtung (91, 92) alternativ über jeweils ein Leitungssystem (71, 81) mit der Volumenmesskammer (50, 54, 55) verbindbar sind, wobei der Querschnitt eines jeden dieser Leitungssysteme so klein gewählt ist, dass darin eventuell vorhandene Blasen erheblich kleiner sind als das von der Volumenmesskammer erfasste Volumen der Probenflüssigkeit.

2. Gerät nach Anspruch 1, dadurch gekennzeichnet, dass eine zusätzliche innere Elektrode (58) in Strömungsrichtung hinter den Leitungssystemen (71, 81) vorgesehen ist, die mit den ersten inneren Elektroden (94, 95) parallel geschaltet ist.

3. Gerät nach einem der Ansprüche 1 oder 2, dadurch gekennzeichnet, dass die äusseren Elektroden (61, 62) zusammen mit der Ventileinrichtung (91, 92) zum alternativen Verbinden der Messaufnehmer (6, 7) mit der Volumenmesskammer (50, 54, 55) derart umschaltbar sind, dass jeweils die dem offenen Ventil zugeordnete äussere Elektrode in Betrieb ist.

4. Gerät nach Anspruch 3, dadurch gekennzeichnet, dass wenigstens eines der Leitungssysteme (71, 81) eine Ausnehmung (75, 85) mit einem Einlass (74, 84) und einem sich von diesem nach unten erstreckenden Auslass (76, 86) einschliesst, und dass die Ventileinrichtung ein Verschlussteil beinhaltet, durch das der Einlass (74, 84) und der Auslass (76, 86) abdeckbar sind.

5. Gerät nach einem der Ansprüche 3 oder 4, dadurch gekennzeichnet, dass die Ventileinrichtung Solenoide (91, 92) einschliesst.

6. Gerät nach Anspruch 5, dadurch gekennzeichnet, dass eine Kontrolleinrichtung (140) vorgesehen ist, die mit den Solenoiden (91, 92) verbunden ist, und dass weiter eine Funktionswahleinrichtung (20) vorgesehen ist, die mit der Kontrolleinrichtung (140) verbunden ist, wobei die Funktionswahleinrichtung (20) derart gestaltet ist, dass bei Betätigung einer der Funktionswahlmöglichkeiten ein bestimmtes Leitungssystem (71, 81) geschlossen und ein anderes geöffnet wird.

7. Gerät nach Anspruch 6, dadurch gekennzeichnet, dass die Kontrolleinrichtung (140) einen Speicher (142) zur Speicherung von einer Mehrzahl von Befehlen einschliesst, wobei jeder Befehl gemäss der Betätigung eines Knopfes (31 bis 39) der Funktionswahleinrichtung (120) erzeugt wird.

8. Gerät nach einem der Ansprüche 4 bis 7, dadurch gekennzeichnet, dass die Ausnehmung (75, 85) eine Einrichtung zur Blasenverminderung einschliesst.

9. Gerät nach Anspruch 7 oder 8, dadurch gekennzeichnet, dass eine Fehlererkennungseinrichtung (144) und eine Datenausgabeeinrichtung vorgesehen sind und dass der Speicher (142) zum Speichern einer Mehrzahl von Befehlen eine Einrichtung zum Ausgeben eines Befehls zur Datenausgabe einschliesst und dass die Kontrolleinrichtung (140) eine Löscheinrichtung einschliesst, durch die auf ein Ausgangssignal von der Fehlererkennungseinrichtung (144) hin ein Befehl zur Datenausgabe gelöscht wird.

10. Gerät nach Anspruch 9, dadurch gekennzeichnet, dass mit der Kontrolleinrichtung (140) die Fehlererkennungseinrichtung (144) verbunden ist und dass die Kontrolleinrichtung (140) eine Einrichtung einschliesst, durch die auf ein Ausgangssignal der Fehlererkennungseinrichtung (144) hin ein vorgewählter Befehl ausser Funktion gesetzt werden kann.

**Claims**

1. Apparatus for the counting of particles floating in an electrically-conducting sample fluid with
– a measurement receiver (6) which has a flow canal in which is arranged a measurement aperture (8), as well as an external electrode (61) positioned before the measurement aperture and an internal electrode (94) positioned behind the measurement aperture,
– an evaluation circuit (120, 122, 125) for the detection, as counting impulses, of the impedance changes occuring in the case of passage of particles through the measurement aperture between the electrodes,
– a volume measurement chamber (50, 54, 55) receiving the sample fluid which has passed through the measurement aperture, the filling time of which determines the counting time of the evaluation circuit,
– and a pump device (150) connected to the volume measurement chamber for the production of a current of sample fluid through the measurement aperture and the flow canal into the volume measurement chamber after arrangement of the measurement receiver in one of the sample fluids to be investigated, characterised in that
– there is provided at least one further measurement receiver (7) which can be introduced into one of the sample fluids, the construction of which corresponds to that of the said measurement receiver (6), whereby the impedance changes occuring between the electrodes (62, 95) of the at least one further measurement receiver are likewise detected as counting impulses with the evaluation circuit,
– the measurement receivers (6, 7) are, by means of a valve device (91, 92), alternately connectable with the volume measurement chamber (50, 54, 55), in each case via a pipe system (71, 81), whereby the cross-section of one of these pipe systems is so small that bubbles possibly present therein are considerably smaller than the volume of the sample fluid received by the volume measurement chamber.

2. Apparatus according to claim 1, characterised in that an additional internal electrode (58) is provided in the direction of flow behind the pipe systems (71, 81), which is connected in parallel with the first internal electrode (94, 95).

3. Apparatus according to one of claims 1 or 2, characterised in that the external electrodes (61, 62), together with the valve device (91, 92), can be switched over for the alternative connection of the measurement receivers (6, 7) with the measurement receivers (6, 7) with the volume measurement chamber (50, 54, 55) in such a manner that, in each case, the external electrode associated with the open valve is in operation.

4. Apparatus according to claim 3, characterised in that at least one of the pipe systems (71, 81) includes a recess (75, 85) with an inlet (74, 84) and an outlet (76, 86) extending downwardly from this, and that the valve device comprises a closure part by means of which the inlet (74, 84) and the outlet (76, 86) can be covered.

5. Apparatus according to one of claims 3 or 4, characterised in that the valve device includes solenoids (91, 92).

6. Apparatus according to claim 5, characterised in that a control device (140) is provided which is connected with the solenoids (91, 92) and that, furthermore, a function selection device (20) is provided which is connected with the control device (140), whereby the function selection device (20) is constructed in such a manner that, in the case of operation of one of the function selection possibilities, one particular pipe system (71, 81) is closed and the other one opende.

7. Apparatus according to claim 6, characterised in that the control device (140) includes a store (142) for the storage of a plurality of commands, whereby each command is produced according to the operation of a knob (31 to 39) of the function selection device (120).

8. Apparatus according to one of claims 4 to 7, characterised in that the recess (75, 85) includes a device for the minimising of bubbles.

9. Apparatus according to claim 7 or 8, characterised in that an error detection device (144) and a data emitting device are provided and that the store (142) for the storage of a plurality of commands includes a device for the giving of a command to the data emission and that the control device (140) includes a cancelling device by means of which a command to the data emission is cancelled by an output signal from the error detection device (144).

10. Apparatus according to claim 9, characterised in that the error detection device (144) is connected with the control device (140) and that the control device (140) includes a device by means of which, by a signal from the error detection device (144), a pre-selected command can be prevented from functioning.

**Revendications**

1. Appareil pour le comptage de particules en suspension dans des liquides à examiner électriquement conductibles comprenant:
- une cellule de mesure (6), comportant un canal de passage dans lequel est aménagé un orifice de mesure (8), ainsi qu'une électrode (61) placée devant l'orifice de mesure et une électrode intérieure (94) placée derrière l'orifice de mesure extérieure,
- un circuit d'interprétation (120, 122, 125) pour l'enregistrement sous forme d'impulsions de comptage des variations d'impédance se produisant entre les électrodes lorsque les particules traversent l'orifice de mesure,
- une chambre volumétrique (50, 54, 55) recevant le liquide à examiner après son passage par l'orifice de mesure, dont le temps de remplissage détermine le temps de comptage du circuit d'interprétation,
- et un dispositif de pompage (150) relié à la chambre volumétrique pour l'obtention d'un courant de liquide à examiner à travers l'orifice de mesure et le canal de passage vers la chambre volumétrique après la mise en place de la cellule de mesure dans un des liquides à examiner, caractérisé en ce que:
- il est prévu encore au moins une autre cellule de mesure (7) pouvant être introduite dans un des liquides à examiner, dont la structure est conforme à celle de la cellule de mesure (6) déjà mentionnée, les variations d'impédance se produisant entre les électrodes (62, 95) de la cellule où des cellules de mesure supplémentaires étant également enregistrées sous la forme d'impulsions de comptage par le circuit d'interprétation,
- les cellules de mesure (6, 7) peuvent être reliées alternativement au moyen d'un dispositif à valves (91, 92) à travers des systèmes de conduits séparés (71, 81) à la chambre volumétrique (50, 54, 55), la section des conduits de chacun de ces systèmes étant choisie suffisamment faible pour que les bulles qui se trouvent éventuellement dans ces systèmes soient de beaucoup inférieures au volume de liquide à examiner contenu dans la chambre volumétrique.

2. Appareil selon la revendication 1, caractérisé en ce qu'il est prévu une électrode intérieure (58) supplémentaire dans le sens de l'écoulement derrière les systèmes de conduits (71, 81) montée en parallèle avec les premières électrodes intérieures (94, 95).

3. Appareil selon l'une des revendications 1 et 2, caractérisé en ce que les électrodes extérieures (61, 62) ensemble avec le dispositif à valves (91, 92) prévu pour relier alternativement les cellules de mesure (6, 7) à la chambre volumétrique, sont commutables de telle façon que ce soit toujours l'électrode extérieure associée à la valve ouverte qui est en service.

4. Appareil selon la revendication 3, caractérisé en ce qu'au moins l'un des systèmes de conduits (71, 81) comporte un évidement (75, 85) muni d'une entrée (74, 84) et une sortie s'étendant à partir de l'entrée vers le bas (76, 86), et en ce que le dispositif à valves comporte un organe d'obturation permettant de recouvrir l'entrée (74, 84) et la sortie (76, 86).

5. Appareil selon l'une des revendications 3 et 4, caractérisé en ce que le dispositif à valves comporte des solénoides (91, 92).

6. Appareil selon la revendication 5, caractérisé en ce qu'il est prévu un dispositif de contrôle (140), relié aux solénoides (91, 92) et en ce qu'il est également prévu un dispositif de sélection des fonctions (20) relié au dispositif de contrôle (140), le dispositif de sélection des fonctions (20) étant structuré de telle façon qu'en cas de mise en service d'une des possibilités de fonctionnement, un système de conduits (71, 81) déterminé soit formé et un autre ouvert.

7. Appareil selon la revendication 6, caractérisé en ce que le dispositif de contrôle (140) comprend une mémoire (142) pouvant assimiler une pluralité d'ordres, chaque ordre étant mis en exécution selon l'actionnement des boutons (31 à 39) du dispositif de sélection des fonctions (120).

8. Appareil selon l'une quelconque des revendications 4 à 7, caractérisé en ce que l'évidement (75, 85) comprend un dispositif pour la réduction des bulles.

9. Appareil selon la revendication 7 ou 8, caractérisé en ce qu'il est prévu un dispositif de détection des erreurs (144) et un dispositif de sortie des données et en ce que la mémoire (142) pouvant assimiler une pluralité d'ordres comporte un dispositif pouvant donner un ordre de sortie de données et en ce que le dispositif de contrôle (140) comporte un dispositif d'effacement pouvant sur un signal provenant du dispositif de détection des erreurs (144), effacer un ordre de sorties de données.

10. Appareil selon la revendication 9, caractérisé en ce que le dispositif de détection des erreurs (144) est relié au dispositif de contrôle (140) et en ce que le dispositif de contrôle (140) comporte un dispositif permettant de mettre hors service un ordre présélectionné suite à un signal provenant du dispositif de détection des erreurs (144).

fig.1

fig.2

fig.3

fig. 4